# EUROPÄISCHE PATENTSCHRIFT

(11) **EP 1 567 245 B1**
(45) Veröffentlichungstag und Bekanntmachung des Hinweises auf die Patenterteilung: **26.03.2008**
(21) Anmeldenummer: 03810899.9
(22) Anmeldetag: 12.11.2003
(51) Int. Cl.: B01D 53/26, F26B 21/02, F26B 21/00

(54) **ANLAGE ZUM TROCKNEN BZW. ENTFEUCHTEN VON GÜTERN**
INSTALLATION FOR DRYING OR DEHYDRATING GOODS
INSTALLATION POUR SECHER OU DESHYDRATER DES PRODUITS

(30) Priorität: 12.11.2002 AT 17022002
(43) Veröffentlichungstag der Anmeldung: 31.08.2005
(73) Patentinhaber: FREH, Alfred, A-8380 Jennersdorf (AT); REITERBAUER, Alois, A-8230 Hartberg (AT)
(72) Erfinder: Wiedl, Alfred, 9523 Landskron (AT); Freh, Alfred, 8380 Jennersdorf (AT); Reiterbauer, Alois, 8230 Hartberg (AT)
(74) Vertreter: Wildhack, Helmut
(86) Internationale Anmeldenummer: PCT/AT2003/000341
(87) Internationale Veröffentlichungsnummer: WO 2004/043574

(56) Entgegenhaltungen:
- DE-U- 20 106 617
- DE-U- 29 820 870
- US-A- 4 601 114

## Beschreibung

Die vorliegende Erfindung betrifft eine neue Anlage zum Trocknen bzw. Entfeuchten von Gütern der verschiedensten Art oder gegebenenfalls auch von größeren Strukturen, wie z.B. Bauwerken od.dgl. Die zu trocknenden Güter sind vorteilhafter Weise kompakt, stückig oder rieselfähig und die Palette derselben reicht von Lebensmitteln über Baustoffe bis hin zu pharmazeutischen Produkten.

Bei verschiedenen Gütern, insbesondere bei solchen des Lebens-, Diät- und Arzneimittelsektors, ist es notwendig, durch Trocknungsvorgänge dafür zu sorgen, dass dieselben einen bestimmten, z.B. den jeweils gültigen gesetzlichen Vorschriften entsprechenden, Feuchtegrad aufweisen bzw. nicht überschreiten, um z.B. deren Haltbarkeit zu gewährleisten.

An sich bietet sich zur Entfeuchtung von Gütern der verschiedensten Art deren Erhitzung auf höhere Temperaturen an, jedoch ist diese seit langem bekannte Methode der Trocknung auf Güter beschränkt, welche nicht temperaturempfindlich sind. Für gegenüber Erwärmung bzw. Erhitzung empfindliche Güter bietet sich für deren Entfeuchtung bzw. Trocknung außer der Anwendung von Vakuum praktisch nur die -Methode an, über bzw. durch sie einen unter Umständen gering erwärmten Strom von Luft mit geringem Feuchtegehalt strömen zu lassen, wobei der Strom dieser trockenen Luft Feuchte aus dem Gut aufnimmt und sie z.B. nach außen hin abführt.

Um zu Luft mit geringem Feuchtegrad zu gelangen, ist es weiters bekannt, dieselbe durch ein hydrophiles Adsorbens hindurchströmen zu lassen, um ihr dort die in ihr enthaltene Feuchte bis zu einem gewünschten niedrigen Feuchtegrad zu entziehen. Um das hierbei mit Feuchte in Form von Wasser schließlich beladene Adsorbens zu regenerieren, ist eine Desorption des aufgenommenen Wassers durch Aufheizen des Adsorbens und Austreiben des adsorbierten Wassers aus demselben, meist unterstützt durch gleichzeitiges Durchleiten eines Trägergas-, insbesondere Luftstroms, vorzunehmen.

Da Energie, insbesondere in Form von elektrischem Strom, in den nächsten Jahren immer knapper werden wird, u. a. bedingt durch die Kritik an der Energiegewinnung aus Atomkraft, und in Folge des weiterhin steigenden Bedarfs der Industrie, besteht das Bestreben bei jedem technischen Verfahren darin, den Verbrauch an Energie, also insbesondere Strom möglichst gering zu halten. Herkömmliche Trocknungsanlagen unter Einsatz von Entfeuchtungs-Adsorbentien sind sehr effizient, haben aber einen hohen Energie-, insbesondere Strombedarf, weil in diesen Anlagen das zu trocknende Adsorbens, in welcher Form auch immer, z.B. als Körnung oder als poröser Körper, üblicherweise mittels elektrischer Heizkörper getrocknet wird. Um das vom Adsorbens aufgenommene Wasser aus demselben wieder zu entfernen, sind also relativ hohe Temperaturen und somit ein hoher Energieaufwand nötig, wobei das vom Adsorbens aufgenommene Wasser verdampft wird und als im Wesentlichen gesättigter Wasserdampf meist in die Umgebungsatmosphäre abgeführt wird.

Eine, sich in den letzten Jahren immer mehr durchsetzende, Methode für das Erhitzen von wasserhaltigen bzw. feuchtehaltigen Gutem besteht darin, das jeweilige Gut mit Mikrowellen anstelle üblicher Heizstäbe od.dgl. aufzuheizen. Hierbei besteht insbesondere bei anorganischen feuchtehaltigen Produkten der Vorteil, dass mittels Mikrowellen-Energie ein anorganisches Produkt selbst im Wesentlichen nicht erwärmt wird, sondern nur die Wassermoleküle der von ihm aufgenommenen und in ihm enthaltenen Feuchte aktiviert werden und als aufgeheizter Wasserdampf aus dem Produkt ausgetrieben werden können.

So ist aus der US 4421651 A ein Verfahren und eine Vorrichtung bekannt, bei welchem bzw. welcher zur Regenerierung eines mit organischen Dämpfen belasteten Molekularsieb-Adsorbens dessen Aufheizung mittels Mikrowellengeneratoren, insbesondere Magnetronen, vorgesehen ist.

Was den Stand der Technik betrifft, so ist auf folgende Druckschriften zu verweisen.

EP 1 010 452 A1. CH 436 612 A, US 5 429 665 A; EP 379 975 A2 und US 4 038 054 A.

Alle diese Schriften offenbaren Vorrichtungen für die Trocknung von Luft, welche zwei im Wechselbetrieb arbeitende Adsorbenskörper od. dgl. aufweisen, die periodisch einander gegenseitig abwechselnd eine Adsorptions- und eine Regenerationsphase durchlaufen.

Es sind z.B. aus der EP 1 010 452 A1 als Adsorbens-Silikagel und zu dessen Regeneration Mikrowellen-Energiequellen bekannt, so wie weiters eine mittels sensorabgestützter Steuereinheit bewirkte Umschaltung von Adsorptions- auf Regenerations-Betrieb jeweils durch Abschalten der Regenerations-Wärmequellen und Umschalten eines entsprechend positionierten Dreiwege-Ventils.

Die EP 379 975 A2 beschreibt eine Anlage zur Lufttrocknung, deren Umschaltung vom Adsorptions- auf den Regenerations-Betrieb mittels einer von Temperatursensoren mit Temperaturdaten belieferbaren Steuerungseinheit bewirkt wird, und zwar in Abhängigkeit von der Temperatur der Luft nach Durchlaufen des sich in Regenerations-Zustandes befindlichen Adsorbens. Weiters ist es aus dieser EP-A2 bekannt, die entfeuchtete Luft mittels Gebläse durch einen Trocknungsbehälter zu saugen.

Auch der US 4 038 054 A ist eine Trocknungs-Vorrichtung zu entnehmen, bei welcher ein Drehschieber aus einer bestimmten Position um einen bestimmten Winkel in oder gegen den Uhrzeigersinn gedreht wird und dadurch jeweils einen der beiden Adsorber auf Adsorptions- oder Regenerations-Betrieb umschaltet. Das dortige Gebläse kann den Trocknungsbehälter nach - oder vorgeschaltet sein.

Die vorliegende Erfindung betrifft eine neue, sich durch einfachen Aufbau und einen besonders niedrigen Energiebedarf auszeichnende Anlage für die Trocknung eines Feuchte enthaltenden Gutes, wie Stück- und Rieselgut, biologisches Material, Brennstoffe, Lebensmittel, Pharmazeutika u.dgl., gemäß den Angaben des einleitenden bzw. klassifizierenden Teiles bzw. Oberbegriff des Anspruches 1.

Die neue Trocknungsanlage ist gemäß dem kennzeichnenden Teil dieses Anspruches 1, dadurch gekennzeichnet, dass deren Entfeuchtungs-Einrichtung - für die Bereitstellung von Regenerationsluft - zumindest eine Luftführungsleitung für die aus der Trockenkammer ausgebrachte, die aus dem zu trocknenden Gut aufgenommene Feuchte enthaltende Luft aufweist, weiche als für die Regenerierung des mit Wasser beladenen bzw. gesättigten Adsorbenskörpers vorgesehene Regenerationsluft jeweils periodisch zu einer der Regenerationsluft-Zuführungen bzw. -Einbfingkammern bzw. zu einem von deren Regenerationsluft-Einbringungsgebläsen führbar und in einen der Adsorbenskörper in einer der Luft-Entfeuchungskammem einbringbar und durch denselben bewegbar ist.

Besonders bevorzugt und hinsichtlich Reduzierung des Energiebedarfs günstig ist eine Ausführungsform der neuen Anlage mit periodischer Umschaltung von Luft-Entfeuchtung auf Adsorbens-Regenerierung und umgekehrt, mit einem Aufbau gemäß Anspruch 2.

Im Rahmen der Untersuchungen, die zur Erfindung geführt haben, wurde gefunden, dass es energetisch und hinsichtlich der Trocknungseffizienz im besonders günstig ist, beim Entfeuchtungs-Betrieb die zu entfeuchtende Luft durch den Adsorbenskörper zu saugen, wie dem Anspruch 3 näher im Detail zu entnehmen ist.

Alternativ und im Hinblick auf eine wirkungsvolle und gleichzeitig schonende Entfeuchtung eines zu trocknenden Gutes lassen sich zusätzliche Energieeinsparungen erzielen, wenn die aus dem Adsorbenskörper der Entfeuchtungs-Einrichtung kommende Luft nicht unter Druck über bzw. durch das zu trocknende Gut geführt wird, sondern diese mittels des jeweiligen Adsorbenskörpers entfeuchtete Luft nach Verlassen der Entfeuchtungs-Einrichtung bei bleibendem Unterdruck über bzw. durch das zu trocknende Gut geführt, also gesaugt wird, wie als Alternative ebenfalls dem Anspruch 3 zu entnehmen.

Für die Regenerierung des mit dem der Luft entzogenen Wasser beladenen Adsorbenskörpers kann eine Ausführungsform der neuen Anlage vorteilhaft sein, bei welcher eine Durchströmung des periodisch zu regenerierenden Adsorbenskörpers mit der zur Regeneration desselben vorgesehenen Luft unter Druck vorgesehen ist, wie im Anspruch 4 geoffenbart.

Dem Anspruch 5 ist eine einfache, robuste und effektiv steuerbare, im Rahmen der Erfindung besonders bevorzugte, Trocknungsanlage zu entnehmen, bei der sowohl der Luftentfeuchtungs- als auch der Adsorbenskörper-Regenerierungs-Betrieb jeweils abwechselnd nacheinander, und zwar unter Zwischenschaltung der Trocknungskammer immer nur bei Unterdruck, erfolgen.

Der Anspruch 6 bezieht sich auf eine den Unterdruck- bzw. Sogbetrieb der neuen Anlage mit hoher Betriebssicherheit und Effektivität sichernde Ergänzung der neuen Anlage.

Der Anspruch 7 hat eine besonders bevorzugte Ausführungsform der erfindungsgemäße Anlage zum Gegenstand, welche sich vor allem dadurch auszeichnet, dass sie bloß ein einziges Sauggebläse benötigt, mittels welchem saugseitig jeweils abwechselnd die für die Entfeuchtung des Gutes in der Trocknungskammer vorgesehene Luft bei Unterdruck durch den ersten, sich im Luftentfeuchtungs-Betrieb befindlichen Anlagen-Strang und dann durch den Trocknungsraum mit dem zu entfeuchtenden Gut gesaugt wird und gebläse-druckseitig die vorher abgesaugte, feuchte-beladene Luft als Regenerationsluft unter Überdruck durch den sich im Regenerations-Betrieb befindlichen zweiten Anlagen-Strang bewegt bzw. gefördert wird.

Zur noch besseren Energienutzung dient eine Ausgestaltung der neuen Trocknungsanlage gemäß Anspruch 8, bei welcher die in die Entfeuchtungs-Einrichtung eintretende bzw. in dieselbe angesaugte Frisch- bzw. Umgebungsluft mittels der den im Regenerations-Betrieb stehenden Anlagen-Strang verlassenden, mit der Feuchte aus dem zu entfeuchtenden Gut und dem von dem mit Wasser beladenen bzw. gesättigten Adsorbenskörper desorbierten Wasser beladenen, mittels des dort in Betrieb stehenden Megatrons erwärmten bzw. erhitzten Regenerationsluft vorgewärmt wird.

Der Anspruch 9 offenbart eine besondere Ausführungsform der neuen Anlage mit miteinander kurzschließ- und drossel-regelbaren Bypass-Leitungen für die Zumischung eines einen Frisch- bzw. Umgebungsluft-Anteils, von z.B. 25 %, in die aus dem sich jeweils gerade im Entfeuchtungs-Betrieb befindlichen ersten Anlagen-Strang kommende bzw. angesaugte und in die Trocknungskammer geführte entfeuchtete Luft.

Für die innerhalb der Anlage vorzunehmende Umschaltung von Entfeuchtungs- auf Regenerations-Betrieb bzw. des dafür vorgesehenen Dreiwege-Umschaltorgans ist eine Steuerung desselben mittels entsprechenden, mit einer Steuerungseinheit datenflussverbundenen Feuchte-Messsensoren gemäß Anspruch 10 besonders bevorzugt.

Für die Umschaltung von einer Betriebsweise auf die andere, also insbesondere, um das Ausschalten des Mikrowellengenerators zu Ende der Regenerierung des Adsorbenskörpers, dann, wenn von demselben zumindest der größte Teil des von ihm adsorbierten Wassers desorbiert ist, zu bewirken, kann es besonders günstig sein, als Steuerungsgröße zusätzlich zur oder aber an Stelle einer Messung der Feuchte der aus dem Adsorbenskörper ausströmenden bzw. abgesaugten feuchte-beladenen Regenerationsluft mittels Erfassung der bei im Wesentlichen vollständig regenerierten Adsorbens signifikant ansteigenden Stromaufnahme des Mikrowellengenerators heranzuziehen, wie dem Anspruch 11 zu entnehmen.

Anhand der Zeichnung wird die Erfindung näher erläutert:

Es zeigen jeweils schematisch die Fig. 1 eine im wesentlichen dem Stand der Technik entsprechenden Trocknungsanlage und die Fig. 2, 3, 4a und 4b drei jeweils verschiedene vorteilhafte Ausführungsformen erfindungsgemäßer Trocknungsanlagen, wobei jene gemäß den Fig. 4a und 4b besonders bevorzugt ist.

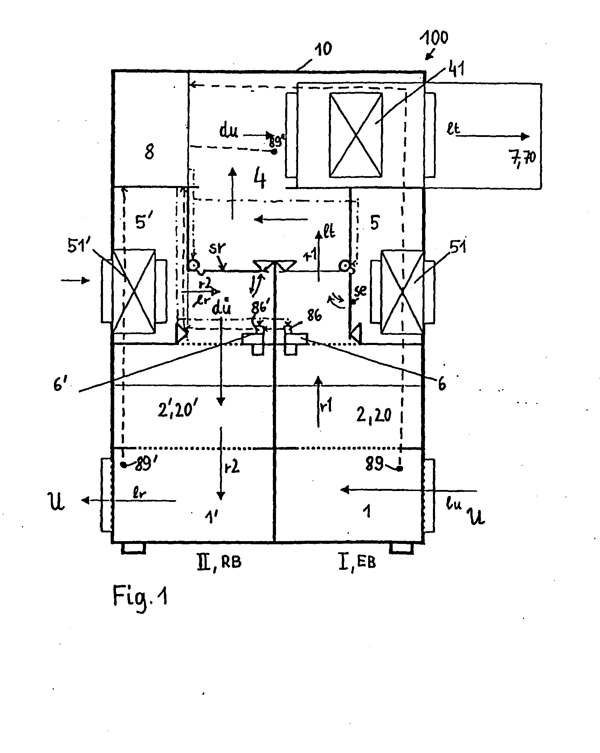

Die in der Fig. 1 dargestellte, den wesentlichen Bestandteil einer dem Stand der Technik entsprechenden Trocknungsanlage 100 bildende Luftentfeuchtungs-Einrichtung 10 umfasst - hier in einem gemeinsamen Gehäuse untergebracht dargestellt - im Wesentlichen mindestens zwei Betriebsstränge 1 und 11 von bevorzugterweise übereinander angeordneten und miteinander in Verbindung stehenden Kammern od. dgl., und zwar jeweils mit einer zu unterst angeordneten Zuführung bzw. Eintrittskammer 1, 1' für jeweils zur Verfügung stehende Frisch- bzw. Umgebungsluft lu, und jeweils einer daran anschließenden, hier oberhalb derselben angeordneten Luft-Entfeuchtungskammer 2, 2', in welcher jeweils ein Luft-Entfeuchtungs-Adsorbenskörper 20, 20', bevorzugt auf Basis von Silkagel, angeordnet ist. Die in der Fig. 1 untere und die obere Begrenzungswandung der Entfeuchtungskammem 2, 2' ist jeweils luftstromdurchlässig, also z.B. als Lochplatte, Gitter od.dgl. ausgeführt und ermöglicht so bei zuerst einmal nicht abgeschaltetem Mikrowellengenerator bzw. Magnetron 6, 6' den Zutritt der zu entfeuchtenden Luft lu aus der Umgebung, durch die Luftzuführung bzw. Eintrittskammer 1,1' zum und durch den Adsorbenskörper 20, 20' und den Austritt entfeuchteter bzw. getrockneter Luft lt aus demselben nach dessen Durchströmung in Aufwärts-Richtung r1.

In jeder der Entfeuchtungskammem 2, 2' ist ein Magnetron 6, 6' für die Mikrowellen-Beheizung des jeweiligen Adsorbenskörpers 20, 20' im Zuge von dessen Regeneration, also für die Desorption des von diesem aus der zu entfeuchtenden Luft aufgenommenen Wassers, angeordnet. Die entfeuchtete Luft it gelangt bei der hier gezeigten Version der Anlage 100 bei Unterdruck du, also unter Sogwirkung aus der Entfeuchtungskammer 2, 2' in eine - hier für beide Betriebsstränge I, II gemeinsame Trockenluft-Abführung 4 mit dort angeordnetem Sauggebläse 41 zur Abführung der entfeuchteten Luft It in eine hier nicht näher gezeigte Trockenkammer 7 mit einem zu trocknenden Gut 70 und verlässt dieselbe nach außen hin.

Oberhalb jeder der Entfeuchtungskammern 2, 2' ist eine Regenerationsluft-Zuführung bzw. -Einbringungskammer 5, 5' mit einem Druck-Gebläse 51, 51' für die Einbringung der für die Regeneration jedes der Adsorbenskörper 20, 20' vorgesehenen, der Umgebung U entnommenen Regenerationsluft Ir angeordnet, welche in zur Aufwärts-Strömungsrichtung r1 der zu entfeuchtenden Umgebungsluft lu durch den Adsorbenskörper 20', 20 beim Entfeuchtungsbetrieb EB im ersten Anlagen-Strang 1 entgegengesetzten Abwärts-Strömungsrichtung r2 unter Überdruck dü durch den jeweils anderen Adsorbenskörper 20', 20' des wie der erste Anlagen-Strang I aufgebauten zweiten Anlagen-Stanges II geführt bzw. gefördert wird und die Entfeuchtungs-Einrichtung 10 schließlich durch die nun für den Austrag von feuchtebeladener Regenerationsluft Iff dienenden Frischluft-Zuführung bzw. -Eintrittskammer 1', 1 schließlich nach außen hin in die Umluft U verlässt.

Während im ersten Anlagen-Strang I der Entfeuchtungs-Betrieb EB läuft, und mittels eines, nämlich des Organs 3, der Dreiwege-Umschalt- bzw. -Schließorgane 3, 3' in der Luftentfäuchtungs-Stellung se der Weg für die beim Durchgang durch den Adsorbenskörper 20, 20' entfeuchtete Luft It in der Aufwärts-Sogrichtung r1 zur Trockenluftabführung 4 hin freigegeben ist und hierbei die Regenerationsluft-Einbringungskammer 5, 5' geschlossen ist, ist der zweite Anlagen-Strang II auf Regenerations-Betrieb RB geschaltet. In diesem Strang II gibt das zweite Dreiwege-Umschalt bzw. Schließorgan 3', 3 in der Regenerations-Stellung sr den Weg für die Regenerationsluft Ir in der zweiten Richtung r2 von der Regenerationsluft-Zuführung bzw. - Einbringungskammer 5', 5 zur jeweils zweiten Entfeuchtungskammer 2', 2 und durch deren Adsorbenskörper 20', 20 frei, wobei gleichzeitig der Weg von der jeweils zweiten Entfeuchtungskammer 2' zur Trockenluft-Abführung gesperrt ist.

In der Entfeuchtungskammer 2', 2 ist während des Regenerations-Betriebes RB der Mikrowellen-Generator 6', 6 eingeschaltet und treibt das beim vorher dort stattgefundenen Entfeuchtungs-Betrieb EB aufgenommene Wasser im Form von Wasserdampf aus dem zweiten Adsorbenskörper 20', 20 aus, der von dem Strom der denselben durchströmenden Regenerationsluft Ir auf- und mitgenommen wird und durch die Frisch- bzw. Umgebungsluft-Eintrittskammer 1', 1 an die Umgebung U abgegeben wird.

Zur Erläuterung der an sich ein vorteilhaftes Ausführungs-Detail und einen vorteilhaften Bestandteil der vorliegenden Erfindung darstellenden Steuerung der neuartigen Anlage wird im Folgenden deren grundsätzliche Aufgabe bzw. Funktion erklärt:

Gesteuert wird das periodische Umschalten jeweils von Entfeuchtungsbetrieb EB zu Regenerationsbetrieb RB und umgekehrt mittels der Dreiwege-Umschalt- bzw. -Schließorgane 3, 3' in jedem der Anlage-Stränge I und II mittels der Steuerungseinheit 8, welche von den mit ihr messdatenfluss- und -austausch-verbundenen, in jeder der Frischluft-Zuführungen bzw. -Eintrittskammern 1, 1' und in der Trockenluft-Abführung angeordneten Feuchtemesssensoren 89, 89', 89" mit Feuchte-Daten versorgt wird. Meldet z.B. der Messsensor 89" in der Abführung während des Entfeuchtungsbetriebs EB ein signifikantes Ansteigen der Feuchtigkeit in der aus dem jeweiligen. Adsorbenskörper 20, 20' kommenden entfeuchteten Luft It über einen vorgegebenen Grenzwert hinaus, oder meldet einer der Feuchtemesssensoren 89', 89 in der Umgebungsluft-Eintriftskammer 1', 1 während des Regenerations-Betriebs RB ein signifikantes Absinken des Feuchtegehaltes in der Regenerationsluft Ir an die zentrale Steuerungseinheit 8, so bewirkt dieselbe ein Umschalten von Entfeuchtungsbetrieb EB auf Regenerationsbetrieb RB in einem der Betriebsstränge I und II bei im Wesentlichen gleichzeitiger Umschaltung vom Regenerationsbetrieb RB auf Entfeuchtungsbetrieb EB im jeweils anderen Anlagen-Strang II und I, indem in einem, nämlich im Strang I, der Stränge I, II das Dreiwege-Umschalt- bzw. -Schließorgan, z.B. die Dreiwegeklappe 3, den Weg zur Trockenluftabführung 4 hin sperrt und gleichzeitig den Weg zur Regenerationsluft-Zuführungen bzw. Einbringungskammer 5 hin öffnet, während im jeweils anderen Strang 11 der Mikrowellengenerator 6' abgeschaltet wird und bleibt und die Dreiwegeklappe 3' zur Trockenluft-Abführung 4 hin gesperrt bleibt und zur Frischluft-Zuführung bzw. - Einbringungskammer 5 hin geöffnet wird. Gleichzeitig sorgt die Steuerungseinheit 8 für ein jeweils entsprechendes Einschalten des Gebläses 51', 51 der Regenerationsluft-Zuführungs- bzw. -Einbringungskammer 5', 5.

Der beschriebene Umschaltrhythmus kann z.B. bei einer Menge von 12 kg Silikagel im Adsorbenskörper 20, 20' in jeder der Luft-Entfeuchtungskammern 2, 2' und bei einer ohne aufwändige Abschirmungsmaßnahmen maximal zulässigen Leistung der Magnetrone 6, 6' von jeweils 1,5 kW etwa 10 min betragen.

Zusätzlich oder alternativ kann für die Steuerung der neuen Entfeuchtungs-Einrichtung 10 ein mit der Steuerungseinheit 8 messdatenfluss-verbundener Messsensor 86, 86' für die Ermittlung der Stromaufnahme des Magnetrons 6, 6' vorgesehen sein, durch welchen bei signifikantem Anstieg von dessen Stromaufnahme die Steuerungseinheit 8 zur Umschaltung der jeweiligen Betriebsart von Entfeuchtungsbetrieb EB auf den Regenerationsbetrieb RB oder umgekehrt, veranlasst wird.

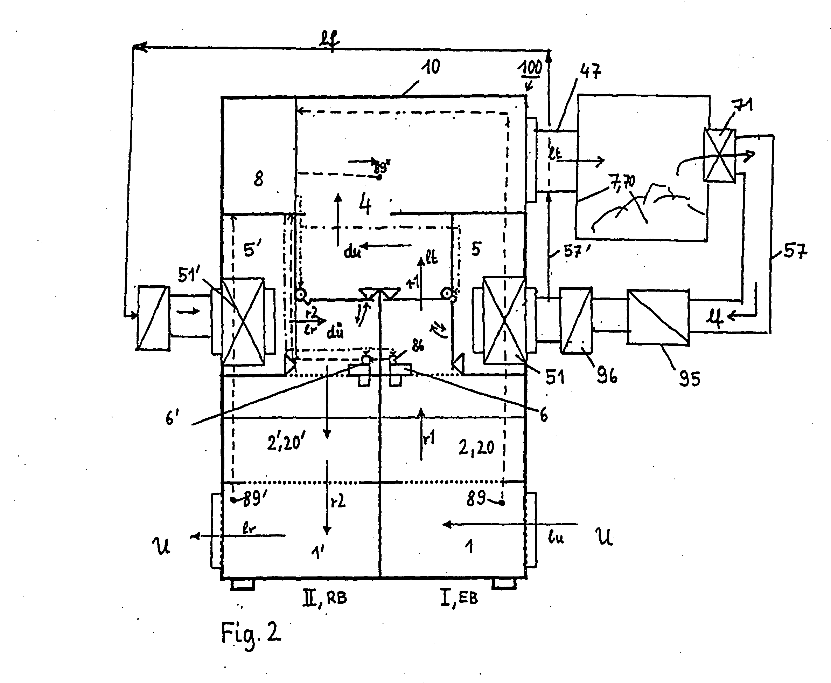

Die Fig. 2 zeigt - bei ansonsten gleichbleibenden Bezugszeichenbedeutungen und Funktionen innerhalb der Entfeuchtungs-Einrichtung 10 - eine gesamte erfindungsgemäße Trocknungsanlage 100, bei welcher - anders als bei jener der Fig. 1, wo die entfeuchtete Luft It in eine Trocknungskammer 7 mit dem zu entfeuchteten Gut 70 unter gewissem Überdruck eingebracht wird - die aus der Entfeuchtungs-Einrichtung 10 kommende getrocknete Luft lt über die Trockenluftleitung 47 in und durch die Trockenkammer 7 bzw. über oder durch das sich dort befindende, zu trocknende Gut 70 bei Unterdruck gesaugt wird, zu welchem Zweck hier kein - wie in Fig. 1 gezeigtes - Saug-Gebläse 41 in der Trockenluft-Abführung 4 der Entfeuchtungseinrichtung 10 gemäß Fig. 1 angeordnet ist, sondern dessen Funktion von einem auf der Auslassseite bzw. in der Abführung 57 für feuchte-beladene Luft if aus der Trockenkammer 7 angeordnetes Sauggebläse 71 übernommen wird.

Das wesentliche Merkmal der erfindungsgemäßen Anlage 100 gemäß Fig. 2 besteht in der Rückführung der - aus der Trockenkammer 7 über die Luftführungs-Leitung 57, wie in der Fig. 2 mit unterbrochenen Linien dargestellt, entweder direkt oder aber günstiger Weise durch ein HeizlKühlregister 95 zum Einstellen einer gewünschten Temperatur und /oder durch einen Kondensator 96 zur Einstellung, insbesondere Absenkung der Luftfeuchte auf einen für den Einsatz als Regenerationsluft Ir für die Entfeuchtung bzw. Regeneration des Adsorbenskörpers 2, 2' jeweils geeigneten bzw. vorgesehen Wert ausgetragenen - feuchte-beladenen Luft lf in eine der Regenerationsluft-Zuführungen bzw. -Einbringungskammem 5, 5' und weiters in einen jeweils sich im Regenerations-Betrieb RB befindlichen Anlagen-Strang I, II.

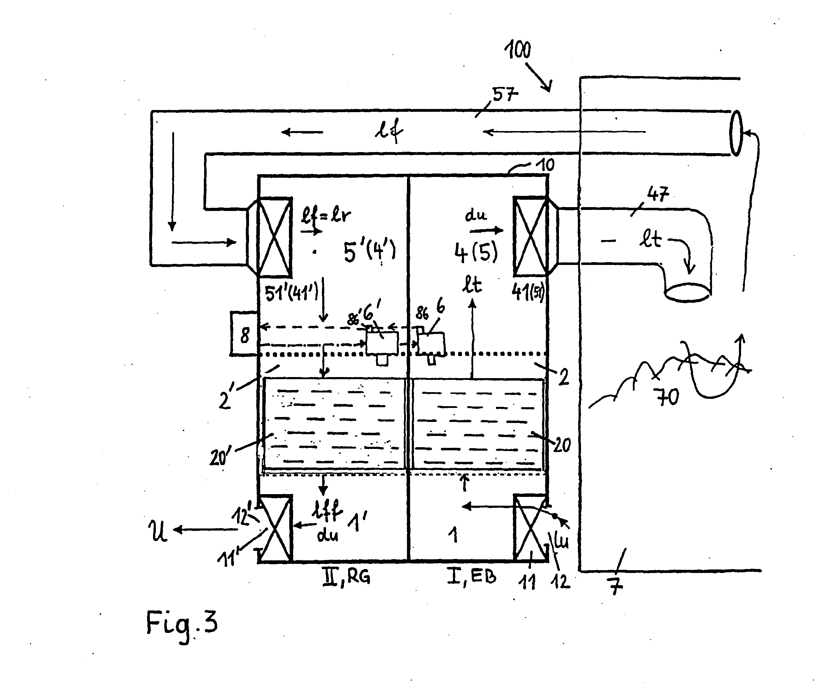

Bei der in Fig. 3 gezeigten Ausführungsform der neuen Trocknungsanlage (100) ist - bei ansonsten gleichbleibenden bzw. analog verwendeten Bezugszeichenbedeutungen - die Entfeuchtungs-Einrichtung 10 strikte in zwei Anlagen-Stränge I und II geteilt, deren erster, nämlich Strang I, sich gerade im Entfeuchtungsbetrieb EB und der andere, nämlich Strang II sich gerade im Regenerationsbetrieb RB befindet. Hier hat jeder der beiden Anlagen-Stränge I, II seine eigene Trockenluft-Abführung 4, 4', welcher jeweils im Regenerations-Betrieb RB die Funktion einer Regenerationsluft-Zuführung bzw. - Einbringungskammer 5, 5' zukommt.

Im in der Fig. 3 gezeigten Zyklusstadium ist das sich am - jetzt als Luftauslass fungierenden - Lufteinlass 12' der zweiten Frischluft-Zuführung bzw. Eintrittskammer 1' befindliche Sauggebläse 11' in Betrieb gesetzt sowie das an der Luft-Eintrittsöffnung der Regenerationsluft-Zuführung bzw. -Einbringkammer 5' (bzw. nach Umschaltung der Betriebsart EB, RB Trockenluftabführung 4') angeordnete, das gerade genannte Sauggebläse 11' unterstützende weitere Sauggebläse 51'. Diese beiden in Betrieb befindlichen Sauggebläse 11', 51' sorgen dafür, dass die Luft bei gleichzeitig ausgeschaltetem Gebläse 11 durch den Lufteintritt 12 in die Frischluft-Zuführung bzw. -Eintrittskammer 1 des ersten Anlagen-Stranges 1 angesaugt wird und mit einem Unterdruck du von beispielsweise 100 bis 400 mbar durch den ersten Feuchte-Adsorbenskörper 20 und durch die erste Trockenluftabführung 4 des ersten Anlagen-Stranges 1, durch das ebenfalls ausgeschaltete Sauggebläse 51 am Ende der Luft-Abführung 4, und weiters durch die Luftführungsleitung 47 in und durch die Trockenkammer 7 mit dem zu entfeuchtenden Gut 70 gesaugt wird und dann als feuchte-beladene Luft If durch die aus der Trockenkammer 7 herausführende Luftführungsleitung 57 und - an Stelle von Frisch- bzw. Umgebungsluft - als Regenerationstuft Ir mittels des laufenden Sauggebläses 51', 51 in und durch die zweite Trockenluft-Abführung 4' weiters durch den mittels des zweiten, in Betrieb befindlichen Magnetron 6' beheizten, zweiten Adsorbenskörper 20' gefördert und schließlich als - vom zu entfeuchtenden Gut 70 und von der vom Adsorbenskörper desorbierten Feuchte - "doppelt" feuchte Luft Iff durch die nun für den Austrag dieser Regenerationsluft dienende Frischluft-Zuführung bzw. -Eintrittskammer 1' gesaugt wird, und schließlich mittels des den Unterdruck du aufrechterhaltenden Sauggebläses 11' durch die Eintrittsöffnung 12' der Kammer 1' hindurch an die Umgebung U abgegeben wird.

Das Ausschalten der Sauggebläse 11', 51' im Anlagen-Strang II und das Einschalten der Sauggebläse 11, 51 im Anlagen-Strang II erfolgt periodisch abwechselnd mittels der Steuerungseinheit 8, und zwar dann, wenn der Stromaufnahme-Sensor 86' des zweiten Magnetrons 6' eine signifikante Zunahme des vom Magnetron 6' aufgenommenen Stroms an diese Steuereinheit 8 meldet, was diese dazu veranlasst, das zweite Magnetron 6' des zweiten Anlagen-Strangs II auszuschalten und ebenso die Sauggebläse 51' und 11' und an deren Stelle nunmehr für das Einschalten des ersten Magnetrons 6 sowie der beiden Sauggebläse 11, 51 des ersten Anlagen-Stranges 1 Sorge zu tragen, so dass nun die Luft in entgegengesetzter Richtung zuerst durch den zweiten Anlagen-Strang 11, durch die Trockenkammer 7 und schließlich durch den ersten Anlagen-Strang I hindurchgesaugt wird.

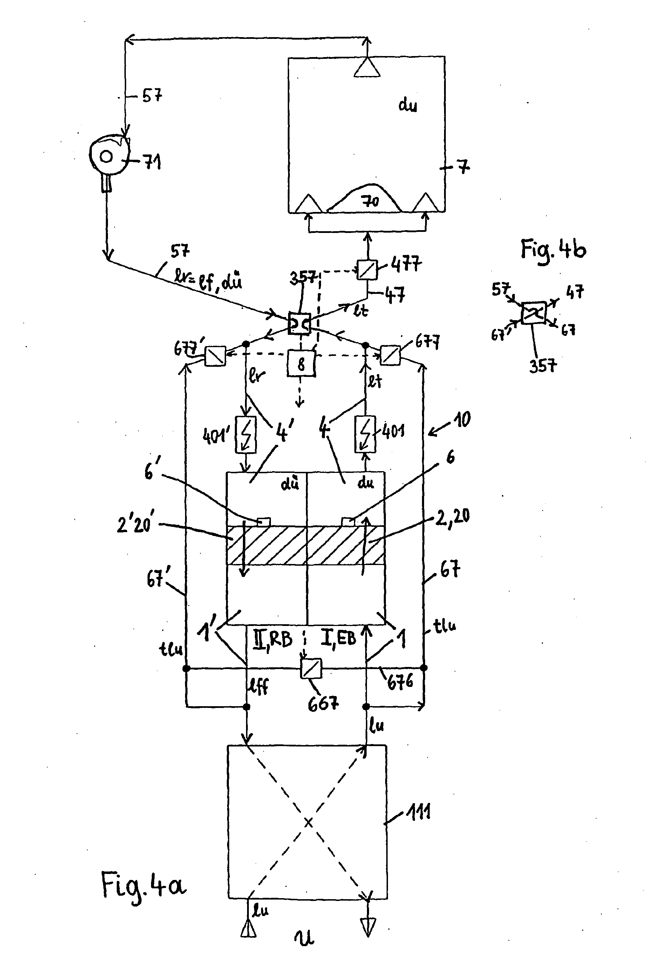

Grundsätzlich ist die in der Fig. 4a und 4b - bei ansonsten gleichbleibenden Bezugszeichen-Bedeutungen - gezeigte, im Rahmen der Erfindung besonders bevorzugte, Energie- und Anlagenkosten sparende, weil bloß ein Sauggebläse-Aggregat benötigende - Ausführungsform der erfindungsgemäßen Trocknungsanlage 100 In ähnlicher Weise aufgebaut, wie die in der Fig. 3 gezeigte Anlage 100. Allerdings weist sie, wie soeben erwähnt, bloß ein Saug-Gebläse bzw. nur einen Saugventilator 71 in der Abführungsleitung 57 für die aus dem Trocknungsraum 7 kommende bzw. abgeführte, durch das dort befindliche, zu entfeuchtende Gut 70 mit Feuchte bzw. Wasserdampf beladene Luft If auf. Mittels dieses Sauggebläses 71 wird - insgesamt gesehen - saugseitig Frisch- bzw. Umgebungsluft lu durch den Adsorbenskörper 20, 20' in der Entfeuchtungskammer 2, 2' des sich jeweils periodisch abwechselnd im Entfeuchtungs-Betrieb EB befindlichen Anlagen-Stanges I, II, durch die Luft-Führungsleitung 47 bei einer von der Steuerung 8 entsprechend eingestellten Kreuz-Umschaltklappe 357, in und durch den Trocknungsraum 7 sowie in den saugseitigen Teil der Abführungsleitung 57 für vom zu entfeuchtenden Gut 70 feuchte-beladene, Unterdruck aufweisende Luft If gesaugt.

Sauggebläse-druckseitig wird diese feuchte-beladene Luft If unter Überdruck dü durch den mittels Magnetron 6' für die Regenerierung erhitzten Adsorbenskörper 20' in dem sich im Regenerations-Betrieb (RB) befindlichen Anlagen-Strang II durchgefördert.

Aus Energiespargründen werden sowohl die durch den ersten Anlagen-Stang I angesaugte Frischluft lu vor Eintritt in den Strang I und die aus dem Anlagen-Stang II kommende, doppelt feuchte-beladene Regenerationsluft Iff, jeweils in ihren Leitungen 1, 1' durch einen Wärmeaustauscher 111 geführt, wodurch die in die Anlage 100 angesaugte Frischluft lu vorgewärmt wird.

Die die gesamte Anlage 100 darstellende Fig. 4a zeigt die von der Steuerungseinheit 8 eingestellte Stellung der Kreuz-Umschaltklappe 357 bei sich im Entfeuchtungs-Betrieb EB befindlichem Anlagen-Strang I und sich in Regenerations-Betrieb RB befindlichem Anlagen-Strang II.

Das Detail der Fig. 4b zeigt die Stellung der Kreuz-Umschaltklappe 357 nach dem von der Steuerung 8 nach Einlangen entsprechender Feuchte-Messdaten von den hier nicht gezeigten Feuchte-Sensoren her veranlassten Umschaltungen auf Regenerations-Betrieb RB im Anlagen-Strang I und auf Entfeuchtungs-Betrieb EB im Anlagen-Strang II.

Es ist deutlich zu erkennen, dass es weder einer Unterbrechung des Betriebes des Sauggebläses 357 noch einer Umschaltung desselben von Saug- auf Druckbetrieb bedarf. Es kann also das Sauggebläse 357 beim jeweiligen Wechsel der Betriebsarten in den Anlagen-Strängen I und II kontinuierlich weiterlaufen.

Aus der Fig. 4a sind weiters noch - die beide Anlagen-Stränge I, II umgehende - Bypass-Leitungen 67, 67' ersichtlich, welche jeweils von den Frischluft-Zuführungen 1, 1' abzweigen und schließlich noch vor der wie oben beschriebenen Kreuz-Umschaltklappe 357 jeweils in die Trockenluft-Abführung 4, 4' münden.

Vor der genannten Einmündung der Bypass-Leitungen 67, 67' ist in denselben jeweils eine Luftmengenstrom-Regel-Reduzier- bzw. -Sperrklappe 677, 677' angeordnet.

Die Bypass-Leitungen 67, 67' können zur Regelung bzw. Nach-Justierung des Feuchtegehaltes der dem Trockenraum 7 über die Luftführung. 47 zugeführten, in dem jeweils sich im Entfeuchtungs-Betrieb EB befindlichen Anlagen-Strang I bzw. II entfeuchteten Luft It dienen, indem in denselben ein Frischluft-Teilstrom tlu aus jeweils einer der Bypass-Leitungen 67, 67' zugemischt wird, so dass dann letztlich in der dem Trocknungsraum 7 zugeführten Luft It ein jeweils gewünschter Trocken- bzw. Feuchtegrad vorliegt.

Für den Umschaltbetrieb ist eine die beiden Bypass-Leitungen 67, 67' direkt verbindende Kurzschlussleitung 676 mit jeweils sperr-, regel- oder öffenbarer Kurzschlussklappe 667 vorgesehen.

Weiters zeigt die Fig. 4a noch eine Luftmengenstrom-Regel- bzw. -schließklappe 477 in der Luftführung 47 zum Trockenraum 7 hin, mittels welcher der Unterdruck du im Trockenraum und somit die Entfeuchtungswirkung in demselben regel- bzw. nachjustierbar ist.

Schließlich sind in der Fig. 4a noch jeweils Heizregister 401, 401' an den Trockenluftabführungen 4, 4' für eine Erwärmung bzw. Vorerwärmung der Trockenluft lt vor deren Eintritt in die Trocknungskammer 7 und/oder der mit Feuchte aus dem zu trocknenden Gut 70 beladenen Regenerierungsluft if bzw. Ir vor deren Eintritt in den jeweils zu regenerierenden Adsorbenskörper 20, 20' gezeigt.

## Patentansprüche

1. Anlage (100) für die Trocknung eines Feuchte enthaltenden Gutes (70) aus der Gruppe Stück- und Rieselgut, biologisches Material, Brennstoffe, Lebensmittel, Pharmazeutika u.dgl. mit eine geringere Feuchtigkeit als die Umgebungsluft aufweisender bzw. einen geringen Feuchtegehalt von bis zu 1 g Wasser/kg Luft enthaltender, entfeuchteter Luft
- mit einer Einrichtung (10) für das Entfeuchten von Luft, innerhalb welcher feuchte Frisch- bzw. Umgebungsluft (lu) durch mindestens einen Körper (20, 20') od.dgl. aus einem luftdurchströmbaren stückigen, körnigen, und/oder porösen Wasserdampf-Adsorbens auf Basis eines silikathältigen Materials, Silikagel od.dgl. hindurch bewegt und schließlich die dort entfeuchtete Luft (1t) über das in einer Trocknungskammer (7) od.dgl. angeordnete zu trocknende Gut (70) geführt wird,
wobei innerhalb der Entfeuchtungs-Einrichtung (10) bei Erreichung der Sättigung des Adsorbenskörpers (20, 20') mit Wasser das Entfeuchten der Frisch- bzw. Umgebungsluft (lu) unterbrochen wird und aus dem Adsorbenskörper (20, 20'), das von demselben adsorbierte Wasser durch Erhitzung und/oder mittels Träger-Luftstrom desorbiert und ausgetragen wird,
- wobei vorgesehen ist, dass die Luftentfeuchtungs-Einrichtung (10) der Trocknungsanlage (100) zumindest zwei Anlage-Stränge (I, II)
- mit, jeweils einer Zuführung bzw. Eintrittskammer (1, 1') für feuchte Frisch- bzw. Umgebungsluft (lu) nachgeordneten und den Adsorbenskörper (20, 20') beherbergenden, luft-durchströmbaren und jeweils mit einem Mikrowellengenerator bzw. Magnetron (6, 6') für die Erhitzung des Adsorbenskörper (20, 20') ausgestatteten, Entfeuchtungskammern (2, 2') und ausströmseitig von denselben zumindest einer Abführung (4) für die entfeuchtete Luft (It) aus den Entfeuchtungskammern (2, 2')
- weiters mit jeweils einer der Entfeuchtungskammern (2, 2') zugeordneten Regenerationsluft-Zuführungen bzw. -Einbringkammern (5, 5'), von welchen aus direkt oder mittels Regenerationsluft-Fördermittel(n) (55, 55') Regenerationsluft (Ir) durch den Adsorbenskörper (20, 20') für die Desorption des aus vom zu trocknenden Gut (70) her feuchte-beladenen Luft (If) von dem eben genannten Adsorbenskörper adsorbierten Wassers nach Erreichung der Sättigung desselben führbar ist,
- und schließlich auf der Trockenluft-Ausströmseite jeder der Entfeuchtungskammern (2, 2') jeweils ein - entweder den Weg zur Trockenluft-Abführung (4) zur Trocknungskammer (7) hin oder aber den Weg zur Regenerationstuft-Zuführung bzw. -Einbringkammer (5, 5') - jeweils einander entgegengesetzt, durch entsprechende Umschaltung sperrendes bzw. freigebendes Dreiwege-Umschalt- bzw. -Schließorgan (3, 3') bzw. insbesondere eine derartige Dreiwege-Umschaltklappe,
umfasst,
**dadurch gekennzeichnet,**
**dass** deren Entfeuchtungs-Einrichtung (10) - für die Bereitstellung von Regenerationsluft (Ir) - zumindest eine Luftführungsleitung (47, 47') für die aus der Trockenkammer (7) ausgebrachte, die aus dem zu trocknenden Gut (70) aufgenommene Feuchte enthaltende Luft (If) aufweist, welche als für die Regenerierung des mit Wasser beladenen bzw. gesättigten Adsorbenskörpers (20) vorgesehene Regenerationsluft (Ir) jeweils periodisch zu der Regenerationsluft-Zuführungen bzw. -Einbringkammern (1, 1') bzw. zu einem von deren Regenerationsluft-Einbringungs-Gebläsen (51, 51') führbar und in einen der Adsorbenskörper (20, 20') in einer der Luft-Entfeuchtungskammern (2, 2') einbringbar und durch denselben bewegbar ist.

2. Anlage nach Anspruch 1, **dadurch gekennzeichnet,**
- **dass** in deren Entfeuchtungs-Einrichtung (10) - jeweils abwechselnd - zuerst eine (2) der Entfeuchtungskammern (2, 2') eines ersten Anlagen-Stranges (I) bzw. deren vorher regenerierter, erster Adsorbenskörper (20) - bei abgeschaltetem erstem Mikrowellen-Generator (6) und bei zur Trockenluft-Abführung (4) in die Trocknungskammer (7) hin geöffnetem und zur Regenerationsluft-Zuführung bzw. -Einbringungskammer (5) hin geschlossenem, ersten Dreiwege-Umschalt- bzw. -Schließorgan (3)- in einer ersten Richtung (r1) von der ersten Frisch- bzw. Umgebungsluft-Zuführung bzw. -Eintrittskammer (1) zur genannten Trockenluft-Abführung (4) hin von der Frisch- bzw. Umgebungsluft (lu) durchströmbar ist,
- während im Wesentlichen gleichzeitig die andere bzw. zweite Entfeuchtungskammer (2') eines zweiten Anlage-Stranges (II) mit dem dortigen mit Wasser beladenen bzw. gesättigten zweiten Adsorbenskörper (20') - bei eingeschaltetem und heiz-aktivem, zweitem Mikrowellen-Generator (6') und bei zur Trockenluft-Abführung (4) hin geschlossenem und zur Regenerationsluft-Zuführung bzw. -Einbringkammer (5') hin geöffnetem zweitem Dreiwege-Umschalt- bzw. -Schließorgan (3') - in der zur ersten Durchströmungs-Richtung (r1) entgegengesetzten, zweiten Richtung (r2) von der zweiten Regenerationsluft-Zuführung- bzw. -Einbringkammer (5') zur zweiten Frisch- bzw. Umgebungsluft-Zuführungs- bzw. -Eintrittskammer (1') hin von der Regenerationsluft (Ir) durchströmbar ist, und dass
- bei signifikantem Anstieg des Feuchtegehalts der die Trockenluft-Abführung (4) zur Trocknungskammer (7) hin durchströmenden, aus dem ersten Adsorbenskörper (20) des ersten Anlagen-Stranges (I) ausströmenden, entfeuchteten Luft (It) über ein jeweils vorgegebenes Feuchte-Niveau und/oder bei Absinken der Feuchte der die Entfeuchtungskammer (2') verlassenden und dann durch die jeweilige Frisch- bzw. Umgebungsluft-Eintrittskammer (1') des zweiten Anlagen-Stranges (II) strömenden und schließlich an die Umgebung abgegebenen Regenerationsluft (Ir)
- durch mittels der von Sensoren (89, 89', 89"; 86, 86') mit Messdaten belieferten Kontroll- und Steuerungseinheit (8) gesteuerten Umschaltung jedes der Dreiwege-Umschalt- bzw. -Schließorgane (3, 3') die, den nun wasserbeladenen ersten Adsorbenskörper (20) des ersten Anlagen-Stranges (I) enthaltende erste Entfeuchtungskammer, (2) unter Einschalten bzw. Aktivieren des dortigen ersten Mikrowellen-Generators (6) auf Adsorbens-Regenerationsbetrieb (RB) und die den frisch regenerierten Adsorbenskörper (20') enthaltende, zweite Entfeuchtungskammer (2') des zweiten Anlagen-Stranges (II) nach Abschalten des dortigen zweiten Mikrowellen-Generators (6') auf Luft-Entfeuchtungs-Betrieb (EB) umstellbar ist.

3. Trocknungsanlage nach Ansprüchen 1 oder 2, **dadurch gekennzeichnet,**
- **dass** - für die Bewegung bzw. Förderung der Frisch- bzw. Umgebungsluft (lu) durch den jeweiligen Adsorbens-Körper (20, 20') und der mittels desselben entfeuchteten Luft (1t) - in der Trockenluft-Abführung (4) der Luft-Entfeuchtungseinrichtung (10) mindestens ein - einen unterhalb des Umgebungsdrucks liegenden Unterdruck (du), vorzugsweise von 100 bis 400 mbar, in der genannten Abführung (4) generierendes - Sauggebläse (41) in der Trockenluft-Abführung (4) angeordnet ist und die Trockenluft (It) mittels dieses Sauggebläses (41) druckseitig mit, vorzugsweise von 100 bis 400 mbar, über dem Umgebungsdruck liegendem, Überdruck (dü) in die Trocknungskammer (7) mit dem zu trocknenden Gut (70) einbringbar bzw. durch die Kammer (7) und über bzw. durch das Gut (70) strömungs-bewegbar ist, oder
- **dass** an Stelle des Sauggebläses (41) in der Trockenluft-Abführung (4) ein Sauggebläse (71) - in der für den Austrag der mit der dem zu entfeuchtenden Gut (70) entzogenen Feuchte beladenen Luft (If) aus der Trockenkammer (7) vorgesehenen Abführung (57) derselben angeordnet ist.

4. Trocknungsanlage nach einem der Ansprüche 1 bis 3, **dadurch gekennzeichnet, dass** entweder jede der beiden Regenerationsluft-Zuführungen bzw. -Einbringkammern (5, 5') mit einem eigenen Gebläse (51', 51) für die Einbringung von aus der Trocknungskammer (7) kommender Regenerationsluft (Ir) und deren Förderung unter Überdruck (dü) durch den jeweils zu regenerierenden Adsorbenskörper (20', 20) ausgestattet ist, oder aber dass nur ein gemeinsames derartiges, jede dieser beiden Zuführungen bzw. Kammern (5, 5') jeweils umschaltbar, mit Regenerationsluft (Ir) versorgendes Gebläse (51) vorgesehen ist.

5. Trocknungsanlage nach einem der Ansprüche 1 bis 4, **dadurch gekennzeichnet,**
- **dass** deren Entfeuchtungs-Einrichtung (10) an Stelle von Regenerationsluft-Zuführungen bzw. -Einbringkammern (5, 5') mindestens zwei voneinander getrennte, jeweils einer der Entfeuchtungskammern (2, 2') mit ihrem jeweiligen Adsorbenskörper (20, 20') der Anlagen-Stränge (I, II) zugeordnete Abführungen (4, 4') für entfeuchtete Luft (It) aufweist, welche über an dieselben angeschlossene, in die Trocknungskammer (7) mit dem zu trocknenden Gut (70) mündende bzw. von dort ausgehende Luftführungsleitungen (47, 57) mit dem Trocknungsraum (7) verbunden sind,
- **dass** die mit den in die Trocknungskammer (7) mündenden bzw. von denselben ausgehenden Luftführungen (47, 57) verbundenen Trockenluft-Abführungen (4, 4') gleichzeitig Regenerationsluft-Zuführungen bzw. -Einbringkammern (5', 5) für als Regenerationsluft (Ir) zurückgeführte, mit Feuchte des Trocknungsgutes beladene Luft (If) sind, und
- **dass** in einer ersten und in einer zweiten Lufteihlassl-auslass-Öffnung (12, 12') der Lufteintrittskammer (1, 1') jeweils ein erstes und ein zweites Sauggebläse (11, 11') angeordnet sind, wobei jeweils abwechselnd bzw. periodisch umschaltbar, mittels des von der Steuerungseinheit (8) in Betrieb gesetzten und gehaltenen zweiten Sauggebläses (11') - bei gleichzeitigem Stillstand des ersten Sauggebläses (11)-Luft bzw. Umgebungsluft (lu) aufeinanderfolgend durch den - die erste Frisch- bzw. Umgebungsluft-Zuführung bzw. -Eintrittskammer (1) den ersten Adsorbenskörper (20), und die erste Trockenluftabführung (4) umfassenden - ersten Anlagen-Strang (I), weiters durch eine erste Luftführungsleitung (47), in und durch den Trocknungsraum (7) mit dem zu entfeuchtenden Gut (70) und weiters dann mit der Feuchte aus dem entfeuchteten Gut (70) beladenen Luft (If) als Regenerationsluft (Ir) über eine zweite Luftführungsleitung (57), durch den die zweite Regenerationsluft-Zuführung bzw. -Einbringkammer (5'), den - bei von der Steuerungseinheit (8) aus in Betrieb gesetztem zweitem Mikrowellen-Generator (6') - das von ihm adsorbierte Wasser an die Regenerationsluft (Ir) abgebenden zweiten Adsorbenskörper (20') und die zweite Frischluft-Zuführungs bzw. -Eintrittskammer (1') umfassenden Anlagen-Strang (II) der Entfeuchtungs-Einrichtung (10) hindurchsaugbar und schließlich an die Umgebung (U) abgebbar ist, und
- **dass** nach beendeter Regeneration des zweiten Adsorbenskörpers (20') - ebenfalls vermittels der Steuerungseinheit (8) - das zweite Sauggebläse (11') und der zweite Mikrowellen-Generator (6') außer Betrieb und das erste Sauggebläse (11) und der erste Mikrowellen-Generator (6) der ersten Entfeuchtungskammer (2) in Betrieb setzbar und die Frisch- bzw. Umgebungsluft (lu) nun in entgegengesetzter Richtung zuerst durch den zweiten Anlagen-Strang (II) der Entfeuchtungs-Einrichtung (10), durch den Trocknungsraum (7) mit dem zu entfeuchtenden Gut (70) und schließlich durch den ersten Anlage-Strang (I) der Luft-Entfeuchtungseinrichtung (10) hindurch saugbar und schließlich als doppelt feuchte Regenerationsluft (Iff) an die Umgebung (U) abgebbar ist.

6. Trocknungsanlage nach Anspruch 5, **dadurch gekennzeichnet , dass** sowohl im ersten als auch im zweiten Anlagen-Strang (I, II) jeweils im Bereich des Übergangs von der Trockenluft-Abführung (4) zur in die Trockenkammer (7) führenden ersten Luftführungsleitung (47) als auch im Bereich des Übergangs der von der aus der Trockenkammer (7) kommenden zweiten Luftführungsleitung (57) in die (mit der Trockentuft-Abführung (4') des zweiten Anlagen-Stranges (II) idente) Regenerationsluft-Zuführung bzw. -Einbringungskammer (5') jeweils zusätzlich ein das jeweils im Betrieb befindliche Sauggebläse (11', 11) der Lufteintrittskammer (1', 1) unterstützendes, mit diesem synchron in Betrieb gesetztes und gehaltenes Sauggebläse (51', 41'; 41, 51) angeordnet ist.

7. Trocknungsanlage nach einem der Ansprüche 1 bis 6, **dadurch gekennzeichnet,**
- **dass** deren Entfeuchtungs-Einrichtung (10) mindestens zwei voneinander getrennte, jeweils einer der Entfeuchtungskammern (2, 2') mit ihrem jeweiligen Adsorbenskörper (20, 20') der Anlagen-Stränge (I, II) zugeordnete Trockenluft-Abführungen (4, 4') für entfeuchtete Luft (It) aufweist, welche über die an dieselben angeschlossene, in den Trocknungsraum (7) mit dem zu entfeuchtenden Gut (70) mündende, Luftführungsleitungen (47, 57) mit dem Trocknungsraum (7) verbunden sind,
- **dass** die ebengenannte Trockenluft-Abführungen (4, 4') gleichzeitig Regenerationsluft-Zuführungen bzw. -Einbringkammern (5, 5') für als Regenerationsluft (Ir) aus der Trockenkammer (7) abgeführte, mit der Feuchte aus dem zu trocknenden Gut beladene Luft (If) sind,
- **dass** in einer (57) der genannten Luftführungen (47, 57) ein Sauggebläse (71) angeordnet ist,
- mittels welchem Frisch- bzw. Umgebungsluft (lu) aufeinanderfolgend durch die erste Frisch- bzw. Umgebungsluft-Zuführung bzw. -Eintrittskammer (1) durch den ersten Adsorbtionskörper (20) und durch die erste Trockenluftabführung (4) eines ersten Anlagen-Stranges (I), weiters über die erste Luftführung (47) durch den Trocknungsraum (7) mit dem zu entfeuchtenden Gut (70) und weiters dann, mit der Feuchte aus dem entfeuchteten Gut (70) beladen, angesaugt wird und die unter dem druckseitigen Druck des Sauggebläses stehende feuchte Luft (If) als Regenerationsluft (Ir) über ein Luftführungs-Umschaltorgan (357), insbesondere Kreuz-Umschaltklappe, die zweite Regenerationsluft-Zuführung bzw. -Einbringkammer (5') (welche gleichzeitig die Trockenluftabführung (4') ist), den - mittels des von der Steuerungseinheit (8) in Betrieb gesetzten und gehaltenen zweiten Mikrowellengenerators (6') seine Feuchte an sie abgebenden zweiten Adsorbenskörper (20') in der zweiten Entfeuchtungskammer (2') und die schließlich die von der das vorn zu entfeuchtenden Gut (70) stammende sowie das vom Adsorbenskörper (20') desorbierte Wasser enthaltenden Luft durchströmte zweite Lufteintrittskammer (1') des zweiten Anlagen-Stranges (II) bewegt bzw. gefördert und schließlich an die Umgebung (U) abgegeben wird, und
- **dass** nach beendeter Regeneration des zweiten Adsorbenskörpers (20') vermittels der Steuerungseinheit (8) das Luftführungs-Umschaltorgan (357), insbesondere die Kreuz-Umschaltklappe, umschaltbar und bei im Wesentlichen gleichzeitiger, mittels der Steuerungseinheit (8) bewirkten Abschaltung des zweiten Mirkowellengenerators (6') - der erste Mikrowellengenerator (6) der ersten Entfeuchtungskammer (2) des ersten Anlagen-Stranges (1) in Betrieb setzbar und die Frisch- bzw. Umgebungsluft (lu) mittels des Sauggebläses (71) in der Luftführung (57) nun in entgegengesetzter Richtung nacheinander zuerst durch den zweiten Anlagen-Strang (II), über die erste Luftführung (47) und durch den Trocknungsraum (7) mit dem zu entfeuchtenden Gut (70) gesaugt und dann unter dem druckseitigen Druck des Sauggebläses (71) durch den ersten Anlagen-Strang (I) der Luft-Entfeuchtungseinrichtung (10) hindurch bewegt bzw. gepresst und schließlich an die Umgebung (U) abgegeben wird.

8. Trocknungsanlage nach Anspruch 7, **dadurch gekennzeichnet, dass** die jeweils abwechselnd von doppelt-feuchte-beladener Regenerationsluft (Iff) und von Frisch- bzw. Umgebungsluft (lu) durchströmbaren Frisch- bzw. Umgebungsluft-Zuführungen (1, 1') als die Wärme der aus dem mikrowellen-beheizten Adsorbenskörper (2, 2') abgeführten doppelt feuchte-beladener Regenerationsluft (Iff) eines der Anlagen-Stränge (I, II) in die in den jeweils regenerierten Adsorbenskörper (2, 2') des jeweils anderen Anlagen-Stranges (II, I) geführten Frisch- bzw. Umgebungsluft (lu) übertragender Wärmetauscher (111) ausgebildet sind.

9. Trocknungsanlage nach Anspruch 7 oder 8, **dadurch gekennzeichnet.**
- **dass** von den Frisch- bzw. Umgebungsluft-Zuführungen (1, 1') die Anlagen-Stränge (I, II) umgebende Frischluft-Teilstrom- bzw. Bypassleitungen (67, 67') abzweigen, welche - jeweils mittels Sperrorgan (677, 677') strömungsmengen-regelbar in die mit dem Trocknungsraum (7) verbundene Luftführung (47) münden, mittels welcher neben der jeweils beim Durchgang durch einen der Anlage-Stränge (I, II) entfeuchteten Luft (It) ein Teilstrom von Frisch- bzw. Umgebungsluft (tlu) in die Luftführung (47) einbringbar ist,
- **dass** weiters die beiden Frischluft-Teilstromleitungen (67, 67') durch eine Verbindungsleitung (676) mit Kurzschließorgan, insbesondere Kurzschlussklappe (667), miteinander verbunden sind, und
- **dass** gegebenenfalls weiters in der Luftführung (47) ein Luftstrom-Drossel- bzw. -Schließorgan (477) für die Einstellung eines jeweils gewünschten Unterdrucks (du) in der Trockenkammer (7) angeordnet ist.

10. Trocknungsanlage nach einem der Ansprüche 1 bis 9, **dadurch gekennzeichnet, dass** zumindest in jeder der beiden Frisch- bzw. Umgebungsluft-Zuführungen bzw. -Eintrittskammern (1, 1') der beiden Anlagen-Stränge (I, II) der Luft-Entfeuchtungseinrichtung (10) und zumindest in der Trockenluft-Abführung (4, 4') zumindest ein Feuchte-Messsensor (89, 89', 89"), bevorzugt mit Temperaturkompensator, für die Ermittlung bzw. Messung des Feuchtegehalts der mittels des ersten Adsorbenskörpers (20) im jeweils im Entfeuchtungs-Betrieb (EB) stehenden Anlagen-Strang (I, II) entfeuchteten Luft (It) bzw. der aus dem mikrowellen-beheizten, zweiten Adsorbenskörper (20') des zweiten Anlagen-Stranges (11, I) austretenden, feuchte-beladenen Regenerationsluft (Iff) angeordnet sind, welche mit der - mit den jeweils einander entgegengesetzt umschaltbaren Schließorganen (3, 3') oder aber mit dem Luftführungs-Umschaltorgan (357), insbesondere Kreuz-Umschaltklappe, und gegebenenfalls weiters mit dem Luftstrom-Drossel- bzw. -Schließorgan (477) und/oder mit dem Kurzschließ-Organ (667), insbesondere Kurzschluss-Klappe, steuerungsdatenfluss- und -austausch-verbundenen - Kontroll- und Steuerungseinheit (8) messdatenfluss- und -austauschverbunden sind.

11. Trocknungsanlage nach einem der Ansprüche 1 bis 10, **dadurch gekennzeichnet , dass** zusätzlich oder alternativ zu den Feuchte-Messsensoren (89, 89', 89") ein Sensor (86, 86') zur Erfassung einer signifikanten Änderung von Stromstärke und Spannung des vom jeweils eingeschalteten Mikrowellengenerator (6, 6') aufgenommenen Stroms vorgesehen ist, welcher mit der mit den jeweils einander entgegengesetzt umschaltbaren Dreiwege-Umschaltorganen (3, 3') oder mit dem Luftführungs-Umschaltorgan, insbesondere Kreuz-Umschaltorgan (357) sowie gegebenenfalls weiters mit der Kurzschlussklappe (667) und/oder Luftstrom-Drossel- bzw. -Schließorgan, insbesondere Drosselklappe (477) und/oder mit den jeweils zueinander entgegengesetzt in Betrieb setzbaren oder ausschaltbaren Sauggebläsen (11', 51'; 11, 41) steuerungsdatenfluss- und -austausch-verbundenen Kontroll- und Steuerungseinheit (8), messdatenftuss- und -austauschverbunden ist.

## Claims

1. An installation (100) for drying a moisture-containing product (70) from the group comprising individual parts and pourable material, biological material, fuels, foodstuffs, pharmaceuticals and the like with dehumidified air having less moisture than the ambient air or containing a low moisture content of up to 1 g of water/kg of air
- having an apparatus (10) for the dehumidifying of air, within which moist fresh or ambient air (lu) is moved through at least one body (20, 20') or the like consisting of a lumpy, granular and/or porous water-vapor adsorbent through which air can flow and which is based on a silicate-containing material, silica gel or the like, and finally the air (It) dehumidified there is directed over the product (70) to be dried, which is arranged in a drying chamber (7) or the like, the dehumidifying of the fresh or ambient air (lu) being interrupted within the dehumidifying apparatus (10) when the saturation of the adsorbent body (20, 20') with water is achieved, and the water adsorbed by the adsorbent body (20, 20') being desorbed and expelled from the latter by heating and/or by means of a carrier airflow,
- provision being made for the air-dehumidifying apparatus (10) of the drying installation (100) to comprise at least two installation lanes (I, II),
- having dehumidifying chambers (2, 2'), which are arranged in each case downstream of a feed or inlet chamber (1, 1') for moist fresh or ambient air (lu), accommodate the absorbent body (20, 20') and are in each case provided with a microwave generator or magnetron (6, 6') for the heating of the adsorbent body (20, 20') and through which air can flow, and at least one discharge (4) on the outflow side of said dehumidifying chambers (2, 2') for the dehumidified air (It) from the latter,
- furthermore having regeneration-air feeds or charging chambers (5, 5') which are assigned in each case to one of the dehumidifying chambers (2, 2') and from which, directly or by means of regeneration-air conveying means (55, 55'), regeneration air (1r) is directed through the adsorbent body (20, 20') for the desorption of the water, adsorbed by the adsorbent body just mentioned from air (lf) laden with moisture due to the product (70) to be dried, after the saturation of said adsorbent body is achieved,
- and finally having, on the dry-air outflow side of each of the dehumidifying chambers (2, 2'), in each case a three-way changeover or closing member (3, 3'), shutting off or opening up, in each case in opposition to one another, by corresponding changeover, either the path for the dry-air discharge (4) toward the drying chamber (7) or else the path for the regeneration-air feed or charging chamber (5, 5'), or in particular one three-way changeover damper of that kind,
**characterized in that** its dehumidifying apparatus (10) - for the provision of regeneration air (1r) - has at least one air-conduction line (47, 47') for the air (If) which is expelled from the drying chamber (7) and contains the moisture received from the product (70) to be dried and which, as regeneration air (lr) provided for the regeneration of the adsorbent body (20) laden or saturated with water, can in each case be directed periodically to the regeneration-air feeds or charging chambers (5, 5') or to one of their regeneration-air charging fans (51, 51') and can be introduced into one of the adsorbent bodies (20, 20') in one of the air-dehumidifying chambers (2, 2') and can be moved through the same.

2. The installation as claimed in claim 1,
**characterized**
- **in that**, in its dehumidifying apparatus (10), the fresh or ambient air (lu) - in each case in an alternating manner - can flow first through one (2) of the dehumidifying chambers (2, 2') of a first installation lane (I) or its first adsorbent body (20), regenerated beforehand, with a first microwave generator (6) switched off and with a first three-way changeover or closing member (3) open for the dry-air discharge (4) into the drying chamber (7) and closed toward the regeneration-air feed or charging chamber (5), in a first direction (r1) from the first fresh- or ambient-air feed or inlet chamber (1) toward said dry-air discharge (4),
- while essentially at the same time the regeneration air (Ir) can flow through the other or second dehumidifying chamber (2') of a second installation lane (II) having the second adsorbent body (20') laden or saturated there with water, with a second microwave generator (6') switched on and active in terms of heating, and with a second three-way changeover or closing member (3') closed toward the dry-air discharge (4) and open toward the regeneration-air feed or charging chamber (5'), in the second direction (r2), opposed to the first throughflow direction (r1), from the second regeneration-air feed or charging chamber (5') to the second fresh- or ambient-air feed or inlet chamber (11), and
- in that, during a significant increase in the moisture content of the dehumidified air (lt), flowing through the dry-air discharge (4) toward the drying chamber (7) and flowing out of the first adsorbent body (20) of the first installation lane (I), beyond a respectively predetermined moisture level and/or during a decrease in the moisture of the regeneration air (Ir) leaving the dehumidifying chamber (2') and then flowing through the respective fresh- or ambient-air inlet chamber (1') of the second installation lane (II) and finally delivered to the environment,
- by changeover of each of the three-way changeover or closing members (3, 3'), this changeover being controlled by means of the monitoring and control unit (8) supplied with measuring data from sensors (89, 89', 89"; 86, 86') , the first dehumidifying chamber (2) containing the now water-laden first adsorbent body (20) of the first installation lane (I), with the first microwave generator (6) there being switched on or activated, can be changed over to adsorbent regeneration operation.(RB), and the second dehumidifying chamber (2'), containing the freshly regenerated adsorbent body (20'), of the second installation lane (II), after the second microwave generator (6') there has been switched off, can be changed over to air-dehumidifying operation (EB).

3. The drying installation as claimed in claim 1 or 2, **characterized**
- **in that**, for the movement or conveying of the fresh or ambient air (lu) through the respective adsorbent body (20, 20') and of the air (It) dehumidified by means of the latter through the dry-air discharge (4) of the air-dehumidifying apparatus (10), at least one suction fan (41) - generating a vacuum (du), preferably of about 100 to 400 mbar, lying below the ambient pressure, in said discharge (4) is arranged in the dry-air discharge (4), and the dry air (It) can be introduced on the pressure side by means of this suction fan (41), at a positive pressure (du) lying above the ambient pressure, into the drying chamber (7) containing the product (70) to be dried or can be moved fluidically through the chamber (7) and over or through the material (70), or
- **in that**, in place of the suction fan (41) in the dry-air discharge (4), a suction fan (71) is arranged in the discharge (57) of the drying chamber (7), this discharge (57) being provided for expelling the air (lf), laden with the moisture extracted from the product (70) to be dried, from the drying chamber (7).

4. The drying installation as claimed in one of claims 1 to 3, **characterized in that** either each of the two regeneration-air feeds or charging chambers (5, 5') is provided with a separate fan (51', 51) for introducing regeneration air (lr) coming from the drying chamber (7) and for delivering it under positive pressure (dü) through the adsorbent body (20', 20) to be regenerated in each case, or else only one common fan (51) of this kind is provided, which fan (51) can in each case be changed over so as to supply each of these two feeds or chambers (5, 5') with regeneration air (lr) .

5. The drying installation as claimed in one of claims 1 to 4, **characterized**
- **in that** its dehumidifying apparatus (10), in place of regeneration-air feeds or charging chambers (5, 5'), has at least two discharges (4, 4') for dehumidified air (It) which are separate from one another and are in each case assigned to one of the dehumidifying chambers (2, 2') with their respective adsorbent body (20, 20') of the installation lanes (I, II) and which are connected to the drying space (7) via air-conduction lines (47, 57) which are connected to said discharges (4, 4') and open into the drying chamber (7) containing the material (70) to be dried or start from there,
- **in that** the dry-air discharges (4, 4') connected to the air-conduction lines (47, 57) opening into the drying chambers (7) or starting from the latter are at the same time regeneration-air feeds or charging chambers (5', 5') for air (If) fed back as regeneration (Ir) air and laden with moisture of the material to be dried, and
- **in that** in each case a first and a second suction fan (11, 11') are arranged in a first and in a second air-inlet/outlet opening (12, 12') of the air-inlet chamber (1, 1'), in which arrangement, in each case in an alternating manner or in such a way as to be capable of being changed over periodically, air or ambient air (lu), by means of the second suction fan (11') put into operation and held in operation by the control unit (8) - with the first suction fan (11) stopped at the same time - can be drawn successively through the first installation lane (I), comprising the first fresh- or ambient-air feed or inlet chamber (1), the first adsorbent body (20) and the first dry-air discharge (4), further through a first air-conduction line (47), into and through the drying space (7) containing the product (70) to be dehumidified and then further, with air (1f) laden with moisture from the dehumidified product (70), as regeneration air (1r) via a second air-conduction line (57), through the installation lane (II), comprising the second regeneration-air feed or charging chamber (5'), the second adsorbent body (20'), delivering the water adsorbed by it to the regeneration air (lr) - when the second microwave generator (6') is put into operation from the control unit (8) - and the second fresh-air feed or inlet chamber (1'), of the dehumidifying apparatus (10) and can finally be delivered to the environment (U), and
- **in that**, after regeneration of the second adsorbent body (20') has been completed, the second suction fan (11') and the second microwave generator (6') can be shut down and the first suction fan (11) and the first microwave generator (6) of the first dehumidifying chamber (2) can be put into operation, likewise by means of the control unit (8), and the fresh or ambient air (lu) can now be drawn in the opposite direction first through the second installation lane (II) of the dehumidifying apparatus (10), through the drying space (7) containing the product (70) to be dried, and finally through the first installation lane (I) of the air-dehumidifying apparatus (10) and can finally be delivered as doubly moist regeneration air (lff) to the environment (U).

6. The drying installation as claimed in claim 5, **characterized in that** a suction fan (51', 41'; 41, 51) assisting the respectively operating suction fan (11', 11) of the air-inlet chamber (1', 1) and put into operation and held in operation synchronously with said suction fan (11', 11) is in each case additionally arranged in both the first and the second installation lane (I, II) in each case in the region of the transition from the dry-air discharge (4) to the first air-conduction line (47) leading into the drying chamber (7) and in the region of the transition of the second air-conduction line (57), coming from the drying chamber (7), into the regeneration-air feed or charging chamber (5') (identical to the dry-air discharge (4') of the second installation lane (II)).

7. The drying installation as claimed in one of claims 1 to 6, **characterized**
- **in that** its dehumidifying apparatus (10) has at least two dry-air discharges (4, 4') for dehumidified air (It) which are separate from one another and are in each case assigned to one of the dehumidifying chambers (2, 2') with their respective adsorbent body (20, 20') of the installation lanes (I, II) and which are connected to the drying space (7) via the air-conduction lines (47, 57) which are connected to said discharges (4, 4') and open into the drying space (7) containing the material (70) to be dehumidified,
- **in that** the dry-air discharges (4, 4') just mentioned are at the same time regeneration-air feeds or charging chambers (5, 5') for air (If) discharged from the drying chamber (7) and laden with the moisture from the material to be dried,
- **in that** a suction fan (71) is arranged in one (57) of said air-conduction lines (47, 57),
- by means of which suction fan (71) fresh or ambient air (lu) is successively drawn through the first fresh- or ambient-air feed or inlet chamber (1), through the first adsorbent body (20) and through the first dry-air discharge (4) of a first installation lane (I), further via the first air-conduction line (47) through the drying space (7) containing the product (70) to be dehumidified, and then further with the moisture from the dehumidified product (70), and the moist air (If), which is under the pressure-side pressure of the suction fan, is moved or conveyed as regeneration air (lr) via an air-conduction changeover member (357), in particular a cross changeover damper, the second regeneration-air feed or charging chamber (5') (which is at the same time the dry-air discharge (4')), the second adsorbent body (20'), delivering the moisture to the regeneration air (Ir) by means of the second microwave generator (6') put into operation and held in operation by the control unit (8), in the second dehumidifying chamber (2') and the second air-inlet chamber (1'), through which the air originating from the product (70) to be dehumidified and containing the water desorbed by the adsorbent body (20') has flowed, of the second installation lane (II) and is finally delivered to the environment (U), and
- **in that**, by means of the control unit (8), after regeneration of the second adsorbent body (20') has been completed, the air-conduction changeover member (357), in particular the cross changeover damper, can be changed over and, when the second microwave generator (6') is switched off essentially at the same time by means of the control unit (8), the first microwave generator (6) of the first dehumidifying chamber (2) of the first installation lane (I) can be put into operation, and the fresh or ambient air (lu), by means of the suction fan (71) in the air-conduction line (57), can now be successively drawn in the opposite direction first through the second installation lane (II), via the first air-conduction line (47) and through the drying space (7) containing the product (70) to be dehumidified and is then moved or forced, under the pressure-side pressure of the suction fan (71), through the first installation lane (I) of the air-dehumidifying apparatus (10) and is finally delivered to the environment (U).

8. The drying installation as claimed in claim 7, **characterized in that** the fresh- and ambient-air feeds (1, 1'), through which doubly moisture-laden regeneration air (Iff) and fresh or ambient air (lu) can flow in each case in an alternating manner, is designed as a heat exchanger (111) which transfers the heat of the doubly moisture-laden regeneration air (Iff), discharged from the microwave-heated adsorbent body (2, 2'), of one of the installation lanes (I, II) into fresh or ambient air (lu) directed into the respectively regenerated adsorbent body (2, 2') of the respective other installation lane (II, I).

9. The drying installation as claimed in claim 7 or 8, **characterized**
- **in that** fresh-air partial flow or bypass lines (67, 67') bypassing the installation lanes (I, II) branch off from the fresh- or ambient-air feeds (1, 1'), which fresh-air partial flow or bypass lines (67, 67') open into the air-conduction line (47) connected to the drying space (7), in each case in such a way that they can be regulated in terms of flow rate by means of a shut-off member (677, 677'), and by means of which fresh-air partial flow or bypass lines (67, 67'), in addition to the air (It) dehumidified in each case when passing through one of the installation lanes (I, II), a partial flow of fresh or ambient air (tlu) can be introduced into the air-conduction line (47),
- **in that**, furthermore, the two fresh-air partial flow lines (67, 67') are connected to one another by a connecting line (676) having a short-circuit member, in particular a short-circuit damper (667), and
- **in that**, if need be, an airflow choke or closing member (477) is furthermore arranged in the air-conduction line (47) for setting a respectively desired vacuum (du) in the drying chamber (7).

10. The drying installation as claimed in one of claims 1 to 9, **characterized in that** at least one moisture measuring sensor (89, 89', 89"), preferably with temperature compensator, for determining or measuring the moisture content of the air (1t) dehumidified by means of the first adsorbent body (20) in the installation lane (I, II) which is in dehumidifying operation (EB) in each case or of the moisture-laden regeneration air (lff) coming out of the microwave-heated, second adsorbent body (20') of the second installation lane (II, I) is arranged at least in each of the two fresh- or ambient-air feeds or inlet chambers (1, 1') of the two installation lanes (I, II) of the air-dehumidifying apparatus (10) and at least in the dry-air discharge (4, 4'), which moisture measuring sensors (89, 89', 89'') are connected for the flow and exchange of measuring data to the monitoring and control unit (8), which is connected for the flow and exchange of control data to the closing members (3, 3'), which can be changed over in each case in opposition to one another, or else to the air-conduction changeover member (357), in particular a cross changeover damper, and if need be also to the airflow choke or closing member (477) and/or to the short-circuit member (667), in particular a short-circuit damper.

11. The drying installation as claimed in one of claims 1 to 10, **characterized in that**, in addition to or as an alternative to the moisture measuring sensors (89, 89', 89"), a sensor (86, 86') for detecting a significant change in the current intensity or voltage of the power consumed by the microwave generator (6, 6') switched on in each case is provided, and this sensor (86, 86') is connected for the flow and exchange of measuring data to the monitoring and control unit (8), which is connected for the flow and exchange of control data to the three-way changeover members (3, 3'), which can be changed over in opposition to one another in each case, or to the air-conduction changeover member, in particular a cross changeover member (357), and if need be also to the short-circuit damper (667) and/or airflow choke or closing member, in particular a choke damper (477), and/or to the suction fans (11', 51'; 11, 41) which can be put into operation or switched off in each case in opposition to one another.

## Revendications

1. Installation pour sécher un produit (70), qui contient d'humidité, parmi la groupe des marchandises en colis et en vrac, de la matière biologique, des combustibles, des denrées alimentaires, des produits pharmaceutiques et pareil au moyen de l'air déshumidifié, qui présente une humidité plus petite que l'air ambiant ou a un taux petit en humidité de jusqu'à 1 g de l'eau / kg de l'air
- comprenant un dispositif (10) pour la déshumidification de l'air, dans lequel on meut de l'air frais ou ambiant (lu) à travers au moins un corps (20, 20') ou pareil d'un adsorbant en vrac, en grains et/ou poreux de vapeur de l'eau, qui peut être passé par l'air, à la base d'un matériau contenant du silicate, du silicagel ou pareil, et finalement on guide l'air y déshumidifié (It) au-dessus le produit à sécher, qui est situé dans une chambre de séchage (7) ou pareil, la déshumidification étant interrompue au-dedans du dispositif de déshumidification (10), quand le corps d'adsorption (20, 20') est saturé d'eau, et l'eau adsorbé par le corps d'adsorption (20, 20') est désorbé et déchargé par un chauffage et/ou au moyens d'un courant d'air porteur,
- dans laquelle on a prévu, que le dispositif de déshumidification d'air (10) de l'installation de séchage (100) comprend au moins deux branches (I, II)
- ayant chacune une chambre de déshumidification (2, 2') postposée à un dispositif d'alimentation ou à une chambre d'admission (1, 1') pour l'air humide frais ou ambiant (lu), qui loge le corps d'adsorption (20, 20'), peut être passée par l'air et est équipée chacune d'un générateur de micro-ondes ou d'un magnétron (6, 6') pour chauffer le corps d'adsorption (20, 20'), et comprenant, au côté d'écoulement de ceux-ci, au moins une sortie (4) pour l'air déshumidifié (It) hors des chambres de déshumidification (2, 2')
- et comprenant de plus, associées chacune à une des chambres de déshumidification (2, 2'), des chambres d'alimentation en air régénératif ou d'introduction (5, 5'), à partir desquelles de l'air régénératif (Ir) est conduisable directement ou à l'aide d'un/des moyen(s) de transport de l'air régénératif (55, 55') à travers le corps d'adsorption (20, 20') pour la désorption de l'eau adsorbé par ledit corps d'adsorption de l'air (If) chargé d'humidité du produit à sécher (70) après que la saturation duquel soit atteinte,
- et finalement un organe renverseur ou de fermeture à trois voies (3, 3'), ou en particulier une trappe renverseuse à trois voies, situé respectivement au côté de sortie de l'air séché de chaque chambre de déshumidification (2, 2'), qui bloque ou débloque par un renversement approprié soit le chemin pour l'évacuation de l'air séché (4) vers la chambre de séchage (7), soit le chemin vers le dispositif d'alimentation en air régénératif ou la chambre d'introduction (5, 5'), respectivement opposé,
**caractérisé en ce,**
**que** le dispositif de déshumidification (10) de laquelle, pour l'approvisionnement de l'air régénératif (Ir), comprend au moins un conduit de guidage d'air (57, 47, 57', 47') pour l'air (If) évacué de la chambre de séchage (7), qui contient l'humidité adsorbé du produit à sécher (70), et qui peut être guidé respectivement en périodes aux dispositifs d'alimentation en air régénératif ou aux chambres d'admission (1, 1') ou vers une des soufflantes d'introduction de l'air régénératif (51, 51') comme l'air régénératif (Ir) prévu pour régénérer le corps d'adsorption (20) chargé ou saturé avec de l'eau, et peut être introduit dans un des corps d'adsorption (20, 20') dans une des chambres de déshumidification d'air (2, 2') et mû à travers ceci.

2. Installation de séchage selon la revendication 1, **caractérisée en ce,**
- **que** dans le dispositif de déshumidification (10) de laquelle alternativement d'abord une (2) des chambres de déshumidification (2, 2') d'une première branche d'installation (1) ou d'un premier corps d'adsorption (20) préalablement régénéré peut être passée par l'air frais ou ambiant (lu) dans un premier sens (r1) à partir du premier dispositif alimentation en air frais ou ambiant ou chambre d'admission (1) vers ledit dispositif d'évacuation de l'air séché (4), avec le premier générateur de micro-ondes (6) étant mis hors circuit, et avec le premier organe renverseur ou de fermeture à trois voies (3) étant ouvert vers le dispositif d'évacuation de l'air séché (4) à la chambre de séchage (7) et fermé vers le dispositif d'alimentation en air régénératif ou vers la chambre d'introduction (5),
- pendant sensiblement en même temps l'autre ou deuxième chambre de déshumidification (2') d'une deuxième branche d'installation (II) avec le deuxième corps d'adsorption (20') en ce lieu-là, qui est chargé ou saturé d'eau, peut être passée par l'air régénératif (Ir), peut être passée dans un deuxième sens (r2), opposé au premier sens de passage (r1), à partir de la deuxième chambre d'alimentation en air régénératif ou d'introduction (5') vers la chambre d'alimentation en air frais ou ambiant ou d'admission (1'), avec le deuxième générateur de micro-ondes (6') étant mis en circuit et activement chauffant et avec le deuxième organe renverseur ou de fermeture à trois voies (3') étant fermé vers le dispositif d'évacuation de l'air séché (4) et ouvert vers le dispositif d'alimentation en air régénératif ou vers la chambre d'introduction (5'), et
- **qu'**il est possible, lors d'une augmentation signifiante du taux d'humidité de l'air déshumidifié (It), qui passe le dispositif d'évacuation de l'air séché (4) vers la chambre de séchage (7) et s'échappe du premier corps d'adsorption (20) de la première branche d'installation (I), au-dessus d'un niveau d'humidité respectivement donné et/ou lors d'une diminution de l'humidité de l'air régénératif (Ir), qui sort de la chambre de déshumidification (2') et passe puis à travers la chambre respective d'alimentation en air frais ou ambiant d'admission (1') de la deuxième branche d'installation (II) et est finalement conduit à l'ambiance,
- de renverser la première chambre de déshumidification (2), qui contient le premier corps d'adsorption (20) de la première branche d'installation (I), maintenant chargé d'eau, en mettant en circuit ou en activant le générateur de micro-ondes (6) en ce lieu-là à un service de régénération d'adsorbant (RB), et de renverser la deuxième chambre de déshumidification (2') de la deuxième branche d'installation (II), qui contient le corps d'adsorption (20') fraîchement régénéré, ayant mis hors circuit le deuxième générateur de micro-ondes (6') en ce lieu-là, à un service de déshumidification de l'air (EB), par un renversement de chacun des organes renverseurs ou de fermeture à trois voies (3, 3'), commandé par l'unité de contrôle et de commande (8) alimentée des données de mesure par des capteurs (89, 89', 89"; 86, 86')

3. Installation de séchage selon la revendication 1 ou 2, **caractérisée en ce,**
- **que**, pour mouvoir et convoyer l'air frais ou ambiant (lu) à travers le corps d'adsorption (20, 20') respectif et l'air déshumidifié (It) par ceci, au moins un ventilateur extracteur (41) est disposé dans le dispositif d'évacuation de l'air séché (4), qui crée dans ledit dispositif d'évacuation une dépression (du) au-dessous la pression ambiante, préférablement de 100 à 400 mbar, et que l'air séché (It) peut être introduit ou peut être mû, au côté refoulement, avec une surpression au-dessus de la pression ambiante, préférablement à 100 à 400 mbar, dans la chambre de séchage (7) contenant le produit à sécher (70) en passant au-dessus ou à travers le produit (70) au moyens de ce ventilateur extracteur (41), ou
- **qu'**un ventilateur extracteur (71), au lieu du ventilateur extracteur (41) dans le dispositif d'évacuation de l'air séché (4), est disposé dans un dispositif d'éduction (57) prévu pour l'éduction de l'air (If) chargé d'humidité extraite du produit à déshumidifier hors de la chambre de séchage (7).

4. Installation de séchage selon une quelconque des revendications 1 à 3, **caractérisée en ce, qu'**ou chacun(e) des deux dispositifs d'alimentation en air régénératif ou chambres d'introduction (5, 5') est équipé(e) d'une soufflante (51', 51) spécifique pour l'introduction de l'air régénératif (Ir) venant de la chambre de séchage (7) et pour le convoyer sous une surpression (dü) à travers le corps d'adsorption (20', 20) respectivement à régénérer, ou bien que c'est ne qu'un seule soufflante (51) de cette sorte, qui alimente chacun(e) de ces deux dispositifs ou chambres (5, 5') en air régénératif (Ir) avec la possibilité de renversement respectif.

5. Installation de séchage selon une quelconque des revendications 1 à 4, **caractérisée en ce,**
- **que** le dispositif de déshumidification (10) de laquelle comprend au moins deux dispositifs d'évacuation (4, 4') séparés l'un de l'autre pour l'air déshumidifié (It), qui sont associés chacun à une des chambres de déshumidification (2, 2'), incluant chacune son corps d'adsorption (20', 20), des branches d'installation (I, II), et qui sont reliés à l'espace de séchage (7) par des conduits de guidage d'air (47, 57), qui sont reliés à eux et débouchent dans la chambre de séchage (7) ou y partent,
- **que** les dispositifs d'évacuation d'air séché (4, 4') reliés aux dispositifs de guidage d'air (47, 57), qui débouchent dans la chambre de séchage (7) ou qui partent de ceux-ci, sont en même temps des dispositifs d'alimentation en air régénératif ou des chambres d'introduction (5, 5') pour l'air (If) recyclé comme l'air régénératif (Ir) et chargé d'humidité du produit à sécher, et
- **qu'**un premier et un deuxième ventilateur extracteur (11, 11') respectifs sont disposés dans une première et dans une deuxième ouverture d'admission/d'éduction (12, 12') de la chambre d'admission d'air (1, 1'), par lesquelles on peut aspirer, en renversant d'une façon alternative ou périodique, de l'air ou de l'air ambiant (lu) successivement à travers la première branche d'installation (1), qui comprend le premier dispositif d'alimentation en air ambiant ou la première chambre d'admission (1), le premier corps d'adsorption (20) et le premier dispositif d'évacuation de l'air séché (4), en outre à travers un premier conduit de guidage d'air (47) dans et à travers l'espace de séchage (7) contenant le produit à déshumidifier (70), et de plus de l'air (If) chargé d'humidité du produit à déshumidifier (70) comme l'air régénératif (Ir) à travers un deuxième conduit de guidage d'air (57), à travers le deuxième dispositif d'alimentation en air régénératif ou la deuxième chambre d'introduction (5'), et, avec le deuxième générateur de micro-ondes (6') mis en service par l'unité de commande (8), à travers cette branche d'installation (II) du dispositif de déshumidification (10), qui comprend le deuxième corps d'adsorption (20'), qui délivre l'eau adsorbé par lui à l'air régénératif (Ir), et la deuxième chambre d'alimentation en air frais ou d'admission (1'), et qu'il est finalement délivré à l'ambiance (U), et,
- la régénération du deuxième corps d'adsorption (20') étant terminée, que le deuxième ventilateur extracteur (11') et le deuxième générateur de micro-ondes (6') peuvent être mis hors de service, tandis que le premier ventilateur extracteur (11) et le premier générateur de micro-ondes (6) de la première chambre de déshumidification (2) peuvent être mis en service, ce qui est fait aussi au moyens de l'unité de commande (8), de manière que maintenant l'air frais ou ambiant (lu) peut être aspiré en sens opposé, d'abord à travers la deuxième branche d'installation (II) du dispositif de déshumidification (10), à travers l'espace de séchage (7) contenant le produit à déshumidifier (70), et finalement à travers la première branche d'installation (I) du dispositif de déshumidification (10), et finalement peut être délivré à l'ambiance (U) comme l'air régénératif double humide (Iff).

6. Installation de séchage selon la revendication 5, **caractérisée en ce, que** non seulement dans la première branche d'installation, mais encore dans la deuxième (I, II) un ventilateur extracteur (51', 41'; 41, 51) est disposé, chacun dans la zone la transition du dispositif d'évacuation de l'air séché (4) au premier conduit de guidage d'air (47), qui conduit à la chambre de séchage (7), mais encore dans la zone de la transition du deuxième conduit de guidage d'air (57) venant hors de la chambre de séchage (7), dans le dispositif d'admission d'air régénératif ou dans la chambre d'introduction (5') (identique avec le dispositif d'évacuation de l'air séché (4') de la deuxième branche d'installation (II)), qui assiste additionnellement chacun le ventilateur extracteur (11', 11) respectivement en service de la chambre d'alimentation en air (1', 1) et est mis et maintenu en service synchronement avec ceci.

7. Installation de séchage selon une quelconque des revendications 1 à 6, **caractérisée en ce,**
- **que** le dispositif de déshumidification (10) de laquelle comprend au moins deux dispositifs d'évacuation de l'air séché (4, 4') pour l'air déshumidifié (It) séparés l'un de l'autre et associé chacun à une des chambres de déshumidification (2, 2'), incluant son corps d'adsorption (20, 20') respectif des branches d'installation (I, II), lesdits dispositifs d'évacuation de l'air séché étant en communication avec l'espace de séchage (7) à travers des conduits de guidage d'air (47, 57), qui sont reliés à eux et débouchent dans l'espace de séchage (7) comprenant le produit à sécher (70),
- **que** lesdits dispositifs d'évacuation de l'air séché (4, 4'), en même temps, sont des dispositifs d'alimentation en air régénératif ou des chambre d'introduction (5, 5') pour l'air (If) évacué de la chambre de séchage (7) comme l'air régénératif (Ir) et chargé d'humidité du produit à sécher,
- **qu'**un ventilateur extracteur (71) est disposé dans un (57) desdits conduits de guidage d'air (47, 57),
- au moyen duquel de l'air frais ou ambiant (lu) est aspiré successivement à travers le premier dispositif d'alimentation en air frais ou ambiant ou la première chambre d'admission (1) de ceci, et à travers le premier dispositif d'évacuation de l'air séché (4) d'une première branche d'installation (I), en outre à travers le premier conduit de guidage d'air (47) et à travers l'espace de séchage (7) contenant le produit à déshumidifier (70), et puis est aspiré, quand il est chargé d'humidité du produit à sécher (70), et que l'air humide (If) sous la pression du côté de refoulement du ventilateur extracteur est délivré comme l'air régénératif (Ir) à travers un organe de renversement du guidage d'air (357), particulièrement un volet directionnel en croix, à travers le deuxième dispositif d'alimentation en air régénératif ou la deuxième chambre d'introduction (5') (qui, en même temps, est le dispositif d'évacuation de l'air séché (4')), en passant le deuxième corps d'adsorption (20') de la deuxième chambre de déshumidification (2'), qui délivre son humidité au moyens du deuxième générateur de micro-ondes (6') mis et maintenu en service par l'unité de commande (8), et finalement que l'air, qui passe la deuxième chambre d'admission (1') de la deuxième branche d'installation (II) et contient l'eau provenant du produit à sécher (70) ainsi que l'eau désorbé du corps d'adsorption (20') est mû ou convoyé, et finalement est délivré à l'ambiance (U), et
- **qu'**après avoir terminé la régénération du deuxième corps d'adsorption (20'), l'organe de renversement du guidage d'air (357), particulièrement le volet directionnel en croix, peut être renversé au moyens de l'unité de commande (8), et le premier générateur de micro-ondes (6) de la premier chambre de déshumidification (2) de la première branche d'installation (I) peut être mis en service avec, sensiblement en même temps, l'interruption du deuxième générateur de micro-ondes (6') provoquée par l'unité de commande (8), et que l'air frais ou ambiant (lu) est en suite aspiré en sens opposé au moyens du ventilateur extracteur (71) dans le conduit de guidage d'air (57) successivement d'abord à travers la deuxième branche d'installation (II), à travers le premier conduit de guidage d'air (47) et à travers l'espace de séchage (7) contenant le produit à déshumidifier (70), et est puis mû ou pressé à travers la première branche d'installation (I) du dispositif de déshumidification (10), et finalement est délivré à l'ambiance (U).

8. Installation de séchage selon la revendication 7, **caractérisée en ce, que** les dispositifs d'alimentation en air frais ou ambiant (1, 1'), qui sont passé respectivement en alternance par l'air régénératif double-chargé d'humidité (Iff) et par l'air frais ou ambiant (lu) sont formés comme un échangeur de chaleur (111), qui transmet la chaleur de l'air régénératif double-chargé d'humidité (Iff) d'une des branches d'installation (I, II), qui a été extraite du corps d'adsorption (2, 2') chauffé par des micro-ondes, à l'air frais ou ambiant (lu) guidé dans le corps d'adsorption (2, 2') respectivement régénéré de l'autre branche d'installation (II, I) respective.

9. Installation de séchage selon la revendication 7 ou 8, **caractérisée en ce,**
- **que** des conduits de courant partiel d'air frais ou de dérivation (67, 67'), qui entourent les branches d'installation (I, II), branchent des dispositifs d'alimentation en air frais ou ambiant (1, 1'), et qui débouchent dans le conduit de guidage d'air (47) relié à l'espace de séchage (7) en réglant la quantité de
- courant au moyens d'un organe de fermeture (677, 677'), et à l'aide desquels, outre l'air déshumidifié (It) lors du passage à travers une des branches d'installation (I, II), un courant partiel d'air frais ou ambiant (tlu) peut être introduit dans le conduit de guidage d'air (47),
- **qu'**en outre les deux conduits de courant partiel d'air frais (67, 67') sont en communication l'un à l'autre à travers un conduit de connexion (676) comprenant un organe de court-circuit, particulièrement un volet de court-circuit (667), et
- **que**, le cas échéant, un organe d'étranglement du courant d'air ou un organe de fermeture (477) est disposé de plus dans le conduit de guidage d'air (47) pour régler une sous-pression (du) respectivement désirée dans la chambre de séchage (7).

10. Installation de séchage selon une quelconque des revendications 1 à 9, **caractérisée en ce, qu'**au moins un capteur d'humidité (89, 89', 89"), de préférence comprenant un compensateur de température, est disposé au moins dans chacun des dispositifs d'alimentation en air frais ou ambiant ou chacune des chambres d'admission (1, 1') des deux branches d'installation (I, II) du dispositif de déshumidification (10) et au moins dans le dispositif d'évacuation de l'air séché (4, 4') pour déterminer ou mesurer le taux d'humidité de l'air déshumidifié (It) au moyens du premier corps d'adsorption (20) dans cette branche d'installation (I, II), qui est respectivement en fonctionnement de déshumidification (EB) ou de l'air régénératif (Iff) chargé d'humidité, qui sort du deuxième corps d'adsorption (20'), chauffé par des micro-ondes, de la deuxième branche d'installation (II, I), lesdits capteurs étant reliés en circulation ou échange des données à l'unité de contrôle et de commande (8), reliée aux organes de fermeture (3, 3') à renverser respectivement en sens opposé l'un à l'autre, ou bien à l'organe de renversement de guidage d'air (357), particulièrement au volet directionnel en croix, et, le cas échéant, en outre à l'organe d'étranglement du courant d'air ou un organe de fermeture (477) et/ou à l'organe de court-circuit (667), particulièrement au volet de court-circuit.

11. Installation de séchage selon une quelconque des revendications 1 à 10, **caractérisée en ce, qu'**un capteur (86, 86') pour déterminer un changement significatif de l'intensité de courant et de la tension du courant absorbé par le générateur de micro-ondes (6, 6') respectif est prévu, soit additionnellement aux, soit comme alternative des capteurs d'humidité (89, 89', 89"), ledit capteur étant relié en circulation ou échange des données à l'unité de contrôle et de commande (8), reliée aux organes de fermeture à trois voies (3, 3') à renverser respectivement en sens opposé l'un à l'autre, ou bien à l'organe de renversement de guidage d'air, particulièrement au volet directionnel en croix (357), ainsi que, le cas échéant, au volet de court-circuit (667) et/ou à l'organe d'étranglement du courant d'air ou l'organe de fermeture, particulièrement au volet d'étranglement (477) et/ou aux ventilateurs extracteurs (11', 51'; 11, 41), qui peuvent être mis en service ou interrompus en sens opposé respectivement l'un à l'autre.
